# EUROPEAN PATENT SPECIFICATION

(11) **EP 3 779 760 B1**
(45) Date of publication and mention of the grant of the patent: **24.05.2023**
(21) Application number: 19866641.4
(22) Date of filing: 26.06.2019
(51) Int. Cl.: G06F 21/64

(54) **BLOCKCHAIN-BASED DATA PROCESSING METHOD AND APPARATUS, AND ELECTRONIC DEVICE**
VERFAHREN UND VORRICHTUNG ZUR DATENVERARBEITUNG AUF BLOCKCHAIN-BASIS SOWIE ELEKTRONISCHE VORRICHTUNG
PROCÉDÉ ET APPAREIL DE TRAITEMENT DE DONNÉES À BASE DE CHAÎNE DE BLOCS, ET DISPOSITIF ÉLECTRONIQUE

(30) Priority: 30.09.2018 CN 201811162432
(43) Date of publication of application: 17.02.2021
(73) Proprietor: Advanced New Technologies Co., Ltd., George Town, Grand Cayman KY1-9008 (KY)
(72) Inventor: QIU, Honglin, Hangzhou, Zhejiang 311121 (CN); ZHANG, Hui, Hangzhou, Zhejiang 311121 (CN)
(74) Representative: Goddar, Heinz J.
(86) International application number: PCT/CN2019/092895
(87) International publication number: WO 2020/062972

(56) References cited:
- CN-A- 106 780 007
- CN-A- 108 389 129
- CN-A- 108 389 129
- CN-A- 108 428 168
- CN-A- 109 598 147
- US-A1- 2017 243 286
- US-A1- 2017 366 348

## Description

### TECHNICAL FIELD

One or more embodiments of the present application relate to the blockchain field, and in particular, to data processing methods, apparatuses, and electronic devices.

### BACKGROUND

A blockchain technology, also referred to as a distributed ledger technology, is a new technology in which a plurality of computing devices participate in "accounting" to maintain a complete distributed database. The blockchain technology has been widely used in many fields because of its features such as decentralization, openness and transparency, and participation of each computing device in recording data in a database, and fast data synchronization between computing devices.

CN 108389129 A, construed using US 2019/0266145 A1, discloses a technique for executing transactions based on blockchain. At a node device associated with a blockchain as a received target transaction, a target transaction published by a user is received, where the received target transaction includes transaction content, and where at least a part of the transaction content includes a content summary associated with target content that is stored in a third-party storage system connected to the blockchain. By the node device and to the third-party storage system, the target content corresponding to the content summary is queried. By the node device, whether the target content is verified is determined. In response to determining that the target content is verified, by the node device, the received target transaction is executed based on the transaction content. By the node device, the received target transaction is stored in a distributed database associated with the blockchain. As such, a user can refer to the target content stored in the third-party storage system connected to the blockchain as the transaction content in the transaction published to the blockchain so as to alleviate redundant storage of data in the blockchain.

### SUMMARY

The invention is defined by the independent claims. Preferred embodiments are recited in the dependent claims. The present application provides a blockchain-based data processing method, where the blockchain stores a plurality of types of service data related to a target service, the service data includes at least data content, and source data referenced by the service data; and the method includes: obtaining authentication root data related to a target service, where the authentication root data is pre-authenticated and carries a data proof indicating that the data authentication is passed; determining first data referencing the authentication root data among the plurality of types of service data, second data referencing the first data, and so on, until a data reference relationship between the plurality of types of service data is obtained; and organizing, based on the data reference relationship, the authentication root data and the plurality of types of service data into a service data chain that uses the authentication root data as a root node.

The present application further provides a blockchain-based data processing apparatus, where the blockchain stores a plurality of types of service data related to a target service, the service data includes at least data content, and source data referenced by the service data; and the apparatus includes: an acquisition module, configured to obtain authentication root data related to a target service, where the authentication root data is pre-authenticated and carries a data proof indicating that the data authentication is passed; a determining module, configured to determine first data referencing the authentication root data among the plurality of types of service data, second data referencing the first data, and so on, until a data reference relationship between the plurality of types of service data is obtained; and an organizing module, configured to organize, based on the data reference relationship, the authentication root data and the plurality of types of service data into a service data chain that uses the authentication root data as a root node.

The present application further provides an electronic device, including: a processor; and a memory, configured to store machine executable instructions; where by reading and executing the machine executable instructions that are stored in the memory and that correspond to a control logic for blockchain-based data processing, the processor is enabled to: obtain authentication root data related to a target service, where the authentication root data is pre-authenticated and carries a data proof indicating that the data authentication is passed; determine first data referencing the authentication root data among the plurality of types of service data, second data referencing the first data, and so on, until a data reference relationship between the plurality of types of service data is obtained; and organize, based on the data reference relationship, the authentication root data and the plurality of types of service data into a service data chain that uses the authentication root data as a root node.

According to the previously described embodiments, the service data chain is organized based on the data reference relationship between the plurality of types of service data related to the target service, the authentication root data that is used as a root node carries a data proof, and independent verification can be performed without relying on external data. Therefore, for any service data in the service data chain, data verification can be completed only by tracing data in the service data chain based on the data reference relationship, so that a trusted service model can be flexibly established based on the service data chain, and a trusted verification service can be provided for the user.

### BRIEF DESCRIPTION OF DRAWINGS

FIG. 1 is a flowchart illustrating a blockchain-based data processing method, according to an example embodiment;
FIG. 2 is a schematic diagram illustrating referencing data by service data stored in a blockchain, according to an example embodiment;
FIG. 3 is a schematic architectural diagram illustrating a consortium blockchain, according to an example embodiment;
FIG. 4 is a schematic diagram illustrating organizing a data chain that can be traced for verification in an online real property rental service, according to an example embodiment;
FIG. 5 is a schematic structural diagram illustrating an electronic device, according to an example embodiment; and
FIG. 6 is block diagram illustrating a blockchain-based data processing apparatus, according to an example embodiment.

### DESCRIPTION OF EMBODIMENTS

The present application aims to provide a technical solution for organizing, based on a data reference relationship, a plurality of types of service data related to a target service stored in a blockchain into a service data chain that can be traced for verification.

During implementation, the plurality of types of service data related to the target service can be stored in the distributed database in the blockchain in advance in the form of a transaction, where the data structure of each type of service data can include at least data content and source data referenced by the service data;

For example, during implementation, the standard format of the transaction supported by the blockchain can be extended to include a reference field; and when each service node in the blockchain constructs a transaction carrying the service data, the source data referenced by the service data can also be filled in the reference field, and then the constructed transaction can be published and stored in the blockchain.

When organizing the service data chain, the upper-layer application can first obtain the authentication root data related to the target service that is stored in the blockchain; where the authentication root data is pre-authenticated and carries a data proof indicating that the data authentication is passed, so that the authentication root data can be independently verified without relying on external data;

Further, after obtaining the authentication root data, the application can determine first data referencing the authentication root data among the plurality of types of service data that are stored in the blockchain, second data referencing the first data, and so on, until a data reference relationship between the plurality of types of service data is obtained.

After determining the data reference relationship between the plurality of types of service data, the upper-layer application can organize, based on the data reference relationship, the authentication root data and the plurality of types of service data into a service data chain that uses the authentication root data as a root node.

In the previously described embodiment, the service data chain is organized based on the data reference relationship between the plurality of types of service data related to the target service, the authentication root data that is used as a root node carries a data proof, and independent verification can be performed without relying on external data. Therefore, for any service data in the service data chain, data verification can be completed only by tracing data in the service data chain based on the data reference relationship, so that a trusted service model can be flexibly established based on the service data chain, and a trusted verification service can be provided for the user.

The following describes the present application by using the embodiments and with reference to the specific application scenarios.

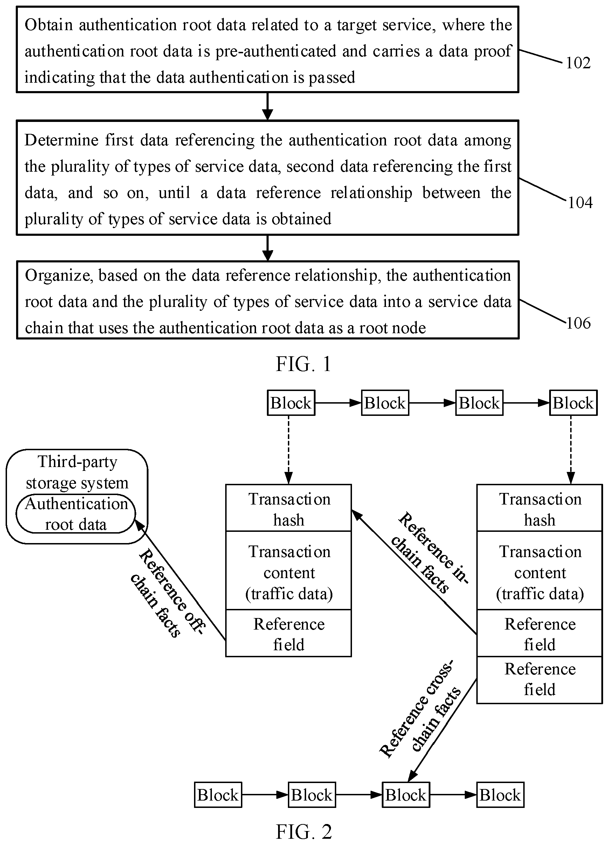

FIG. 1 illustrates a blockchain-based data processing apparatus, according to an embodiment of the present application, where the method is applied to an application client device; the blockchain stores a plurality of types of service data related to a target service; and the service data includes at least data content and source data referenced by the service data. The method includes the following steps:
Step 102: Obtain authentication root data related to a target service, where the authentication root data is pre-authenticated and carries a data proof indicating that the data authentication is passed.
Step 104: Determine first data referencing the authentication root data among the plurality of types of service data, second data referencing the first data, and so on, until a data reference relationship between the plurality of types of service data is obtained.
Step 106: Organize, based on the data reference relationship, the authentication root data and the plurality of types of service data into a service data chain that uses the authentication root data as a root node.

The blockchain described in the present application can be a public blockchain, a private blockchain, a consortium blockchain, etc., which is not limited in the present application.

For example, in a scenario, the blockchain can be a consortium blockchain that includes member node devices such as a service device of a real property certification authority, a service device of a real property rental agency, a terminal device of a tenant, and a smart device installed in a real property source to be rented; and the operator of the consortium blockchain can rely on the consortium blockchain to deploy the online real property rental service. Each of the member node devices can serve as a service node for the online real property rental service. Each service node can publish the service data generated by itself in the form of a transaction in the consortium blockchain, and store the published transaction in the distributed database in the consortium blockchain after the published transaction passes through the consensus processing by the consensus nodes, so as to compete publishing of the service data generated by itself to the blockchain.

It is worthwhile to note that the transaction described in the present application refers to a group of data that is created by a user through a blockchain and that needs to be finally sent to the distributed database in the blockchain.

A transaction in the blockchain has a narrow sense and a broad sense. In a narrow sense, a transaction refers to a value transfer initiated to a user to the blockchain. For example, in a conventional bitcoin blockchain network, a transaction can be a transfer initiated by a user in the blockchain. In a broad sense, a transaction refers to a group of data that is published by a user to the blockchain and that includes a service intention. For example, an operator can establish a consortium blockchain based on actual service needs, and deploy some online services unrelated to value transfer based on the consortium blockchain, such as real property rental service, vehicle dispatching service, insurance claim settlement service, credit service, and medical service. In such a consortium blockchain, a transaction can be a service message or service request that is published by a user in the consortium blockchain and that includes a service intention.

The target service can include any type of online service that can be deployed in a blockchain, for example, online real property rental service. Accordingly, the service data can include any type of data related to the online service deployed in the blockchain, where the data type of the service data can generally depend on the specific service type of the target service deployed in the blockchain.

For example, when the target service is the online real property rental service, the service data used in the online real property rental service can generally include property title data of a real property, real property data of the real property, rental contract data of the real property, smart hardware data installed in the real property, etc.

The application client device can include any type of upper-layer application that implements a specific service function by using the lower-layer service data stored in the blockchain as data support.

For example, in the online real property rental service deployed in the blockchain, the application client device can be an APP client that performs a service function such as verifying whether a real property is a trusted real property, and whether a tenant is a trusted tenant by using service data related to the online real property rental service that is stored in the blockchain as data support.

In the present application, when the operator of the blockchain deploys the target service based on the blockchain, a plurality of types of service data related to the target service can be stored in the distributed database in the blockchain in advance in the form of a transaction.

It is worthwhile to note that in the conventional blockchain, when data is stored in the blockchain in the form of a transaction, only the data content of the data to be stored is generally included in the transaction, and the data reference relationship between the stored data is not carried in the transaction.

In practice, when some online services involving multiple service nodes are deployed in a blockchain, the online services are generally related to a plurality of types of service data; In addition, there is generally a certain data reference relationship between the plurality of types of service data related to the online service. In this case, when each service node in the blockchain stores the service data in the blockchain in the form of a transaction, because the transaction does not carry the data reference relationship, the data reference relationship between the service data stored in the blockchain by each service node is not clear, and a "data island" is formed, so that the integrity of the service data of the online service cannot be ensured.

Therefore, in the present application, the standard format of the transaction supported by the blockchain can be expanded in advance, and at least one reference field can be added to the original data format of the transaction, where the reference field is specifically used to accommodate the source data referenced by the service data.

When each service node in the blockchain constructs a transaction carrying service data, in addition to the data content of the service data that needs to be verification request can be filled in the transaction, the source data referenced by the service data can also be filled in the reference field, so as to write a data reference relationship in the stored service data.

That is, in the present application, the service data stored by each service node in the blockchain can follow the same standard data structure. The standard data structure can include at least the data content and the source data referenced by the service data.

It is worthwhile to note that a plurality of reference fields can be added to the standard format of the transaction; that is, the transaction data can reference a plurality of types of source data.

In an illustrated embodiment, in order to reduce the amount of the stored service data, when each service node fills the source data referenced by the service data in the reference field in the transaction, a data digest (such as a hash value) of the source data can be calculated in advance, and then the data digest of the source data can be filled in the reference field in the transaction. Of course, in practice, the original data content of the source data referenced by the service data can be directly filled in the reference field in the transaction. In an example used in the following embodiment, the data digest of the source data referenced by the service data is filled in the reference field in the transaction.

After each service node constructs a transaction for carrying service data, the transaction can be published on a blockchain, and consensus processing is performed by consensus nodes in the blockchain. When the transaction consensus is passed, the transaction can be stored in a particular block in the blockchain, so as to publish the service data in the blockchain.

It is worthwhile to note that when a member node device in a consortium blockchain performs consensus processing on a smart contract published to the blockchain, a consensus algorithm used and a specific consensus process are omitted in the present application for simplicity; and a person skilled in the art can implement the technical solution described in the present application by referring to the descriptions in the existing technology.

In the present application, the source data that can be referenced by the service data stored by each service node in the blockchain is not limited and can be flexible. The data can be data that has been stored in the blockchain, or can be persistent data that has been stored in a third-party storage system interfaced with the blockchain.

FIG. 2 is a schematic diagram illustrating referencing data by service data stored in a blockchain, according to an example embodiment.

As shown in FIG. 2, service data stored in a blockchain can reference service data already stored in a block in the same blockchain, or can reference service data stored in a block in another blockchain. For example, the blockchain can be a consortium blockchain including a plurality of child chains. Each service node can store the service data generated by itself on different child chains; and the service data stored in another child chain can be referenced, and even the authentication root data stored in the third-party storage system interfaced with the blockchain can also be referenced. For example, the third-party storage system can be a content addressable storage (CAS) system that provides a reliable data storage service for the blockchain.

In the present application, the plurality of types of service data related to the target service can further include at least authentication root data. The authentication root data refers to data that has been authenticated in advance, carries a data proof indicating that the data authentication is passed, and can be independently verified without relying on external data.

The authentication root data can be stored in the blockchain in advance, or can be independently stored in a third-party storage system interfaced with the blockchain, which is not limited in the present application. For example, as shown in FIG. 2, the authentication root data is stored independently in a third-party storage system interfaced with a blockchain.

The operator of the blockchain can develop an upper-layer application based on the service data stored in the blockchain, and the upper-layer application can organize, based on the data reference relationship, the plurality of types of service data related to the target service that are stored in the blockchain into the service data chain that can be traced for verification.

During implementation, the upper-layer application can first obtain the authentication root data related to the target service, and then determine the first data referencing the authentication root data among the plurality of types of service data stored in the blockchain; and after determining the first data referencing the authentication root data, the upper-layer application determines the second data referencing the first data among the plurality of types of service data in the same manner, and so on, until the data reference relationship between the plurality of types of service data is obtained.

For example, in an illustrated embodiment, when determining the first data referencing the authentication root data among the plurality of types of service data, the upper-layer application can first calculate a data digest of the authentication root data, and then use the data digest of the authentication root data as a query index to initiate a query in a block of the blockchain. The node device in the blockchain can match the data digest of the authentication root data with the data digest of the referenced source data among the plurality of types of service data stored in the blockchain in response to the query initiated by the upper-layer application; and if the data digest of the source data referenced by any target service data in the plurality of types of service data matches the data digest of the authentication root data, the node device can return the target service data or the data digest of the target service data as a query result to the upper-layer application. After receiving the query result, the upper-layer application can determine the target service data as the first data referencing the authentication root data. The implementation process in which the upper-layer application determines the second data referencing the first data among the plurality of types of service data is the same as the previously described implementation process. Details are omitted here for simplicity.

It is worthwhile to note that a data reference relationship between the plurality of types of service data stored in the blockchain can be customized by an operator of the blockchain based on service features of an online service deployed in the blockchain, and is not limited in the present application.

After determining the data reference relationship between the plurality of types of service data, the upper-layer application can organize, based on the data reference relationship, the authentication root data and the plurality of types of service data into a service data chain by using the authentication root data as a root node.

The service data chain is organized based on the data reference relationship between the plurality of types of service data related to the target service, the authentication root data that is used as a root node carries a data proof, and independent verification can be performed without relying on external data. Therefore, for any service data in the service data chain, data verification can be completed only by tracing data in the service data chain based on the data reference relationship, so that the upper-layer application can flexibly establish a trusted service model based on the service data chain, so as to provide a trusted verification service for the user.

A user can initiate a service verification request for the target service through an upper-layer application. After receiving the service verification request initiated by the user, the upper-layer application can perform, based on the service data chain, a service verification for the target service in response to the service verification request, and then return a corresponding service verification result to the user.

The following description is based on an example in which the blockchain is a consortium blockchain and the target service is the online real property rental service.

It is worthwhile to note that the online real property rental service is only used as an example of the target service. Clearly, in practice, the target service can be one of other types of online services, which are not listed in the present application.

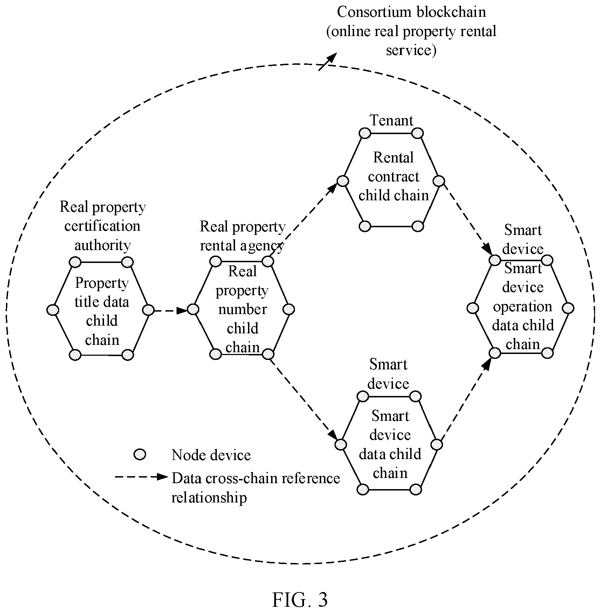

FIG. 3 is a schematic architectural diagram illustrating a consortium blockchain, according to an example embodiment.

As shown in FIG. 3, in an illustrated embodiment, when the online real property rental service is deployed in the consortium blockchain, a real property certification authority, a real property rental agency, a tenant, and a smart device installed in the to-be-rented real property can all join the consortium blockchain as members of the consortium blockchain, and participate in the service process of the online real property rental service as service nodes in the online real property rental service.

In an illustrated embodiment, the consortium blockchain can include a plurality of child chains. As shown in FIG. 3, an independent child chain can be deployed for each member of the consortium blockchain, such as a real property certification authority, a real property rental agency, a tenant, and a smart device. For example, a property title data child chain can be deployed for the real property certification authority, a real property number child chain can be deployed for the real property rental agency, a rental contract child chain can be deployed for the tenant, and a smart device data child chain and a smart device operation data child chain can be deployed for the smart device. As a result, the members of the consortium blockchain such as the real property certification authority, the real property rental agency, the tenant, and the smart device can store the service data generated by themselves in the respective child chains.

The real property certification authority can perform data authentication on the property title data of the real property, and generate the property title data of the real property after the verification is passed, where the generated property title data can include the property title data of the real property and the data proof indicating that the property title data has passed the data authentication. The data proof carried in the property title data can be verified to determine whether the real property corresponding to the property title data is a real property with property title.

For example, in practice, after performing data authentication on the property title data of the real property, the real property certification authority can sign the property title data based on the held private key, and use the signed property title data as the property title data. In this case, the data proof is a signature carried in the property title data.

The property title data generated by the real property certification authority can be stored persistently in the service device of the real property certification authority. Alternatively, the real property certification authority can publish the generated property title data to the consortium blockchain in the form of a transaction, and store the data in a block of the property title data child chain.

The property title data carries a data proof, and independent verification can be performed without relying on external data. Therefore, when a transaction is constructed based on the property title data, the reference field in the transaction can be a null value.

The real property rental agency (or a rental representative) can segment at least a portion of a real property with proper title data to a rentable unit, and generate at least one property number for the property code, and the encoded information of each real property number can include basic information such as a real property size, decoration information, and smart hardware installed in the real property.

The real property number references the property title data stored in the blockchain, indicating the real property belongs to the property title data. After generating a property number for the segmented property, the real property rental agency can construct a transaction based on the real property number, fill a data digest of the property title data in a reference field of the transaction, and then publish the transaction to the consortium blockchain for storage in a block of the real property number child chain. In practice, a plurality of rentable real properties can be segmented based on the property title data of a real property.

When renting a real property among the plurality of real properties, a tenant can sign a rental contract online with a rental agency based on a real property number. For example, the tenant and the real property rental agency can sign the rental contract by using the held private key, so as to complete the signing of the rental contract.

The rental contract references the real property number stored in the blockchain, and the historical rental contracts stored in the blockchain and the rental contract currently in effect can be queried based on the real property number.

When the rental contract is signed, the tenant can construct the transaction based on the signed rental contract, fill the data digest of the real property number of the rented real property in the reference field of the transaction, and then publish the transaction to the consortium blockchain for storage in the block of the rental contract child chain.

One real property can correspond to a plurality of historical rental contracts stored in the blockchain and one rental contract currently in effect.

Of course, in practice, the signed rental contract can be stored by the real property rental agency in the blockchain.

For example, the real property rental agency constructs a transaction based on the signed rental contract, fill a data digest of the real property number of the rented real property in a reference field of the transaction, and then publish the transaction to the blockchain for storage in a block of the blockchain.

A smart device can collect basic data related to the smart device that needs to be stored in a blockchain as the smart device data.

The smart device data can reference a real property number stored in a blockchain, so that the smart device can be bound to the real property number of the real property where the smart device is installed.

The smart device can construct a transaction based on the collected smart device data, fill a data digest of the real property number of the real property where the smart device is located in the reference field of the transaction, and then publish the transaction to the consortium blockchain for storage in a block of the smart device data child chain.

In addition, the smart device can collect the smart device operation data generated during the operation of the smart device. The smart device operation data can reference the smart device data stored in the blockchain, indicating that the smart device operation data is the operation data generated by the smart device; alternatively, the smart device operation data can reference the rental contract stored in the blockchain, indicating that the smart device operation data is the operation data generated in the rental period corresponding to the rental contract.

The smart device can construct a transaction based on the collected smart device operation data, fill in the reference field of the transaction with the data digest of the real property number of the real property where the smart device is located and the data digest of the rental contract currently in effect of the real property where the smart device is located, and then publish the transaction to the consortium blockchain for storage in a block of the smart device operation data child chain.

The smart device operation data is specifically used to determine the active time of the tenant in the real property. For example, in practice, the smart device operation data can be log data generated during operation of the smart device installed in the real property, where the log data can reflect whether the smart device in the real property is used by the tenant, and indirectly reflect whether the tenant is a trusted tenant that actually lives in the rented real property.

Further, in a scenario, the upper-layer application can count the active time of the tenant in the rented real property based on the smart device operation data stored in the consortium blockchain, and issue a certain number of rental credits to the tenant when the active time of the tenant reaches a certain threshold.

For example, the counted active time can be compared with a predetermined threshold (for example, two weeks); and if the active time reaches the predetermined threshold, a certain number of rental credits can be issued to the tenant.

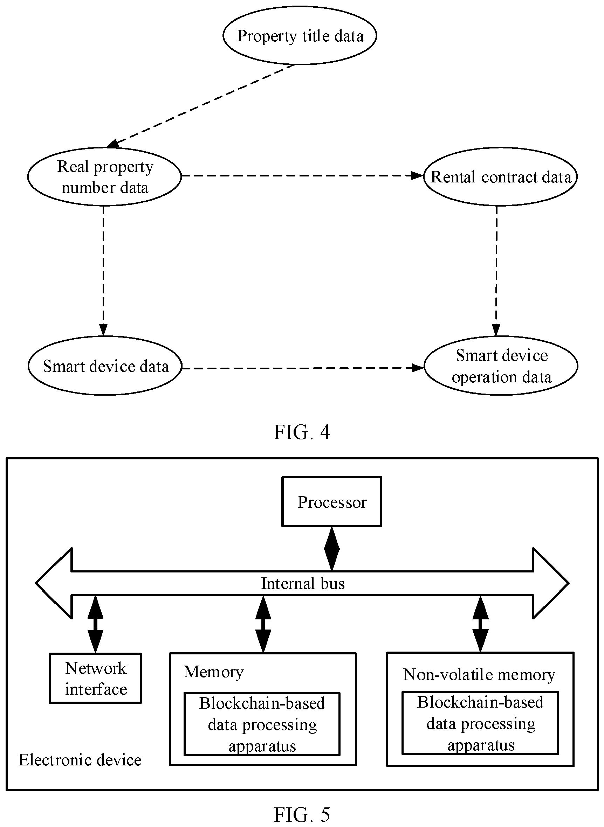

FIG. 4 is a schematic diagram illustrating organizing a data chain that can be traced for verification in an online real property rental service, according to an example embodiment.

As shown in FIG. 4, an upper-layer application can obtain property title data of a real property as authentication root data; sequentially determine a real property number referencing the property title data, a rental contract referencing the real property number, smart device data referencing the real property number, and smart device operation data referencing the rental contract and the smart device data; and then organize the determined data reference relationship, the real property number referencing the property title data, the rental contract referencing the real property number, the smart device data referencing the real property number, the smart device data referencing the smart device data, and the smart device operation data referencing the rental contract and the smart device data into a data chain that uses the property title data as a root node.

It is worthwhile to note that, in practice, the data reference relationship between the property title data, the real property number data, the rental contract data, the smart device data, and the smart device operation data can be adjusted and interchanged based on actual service needs, which is not limited in the present application.

Further, the upper-layer application can flexibly establish a trusted service model based on the previous data chain, and provide a trusted verification service for a user (the user can be a tenant, a landlord, or a real property rental agency).

The user can initiate a service verification for the online real property rental service by initiating a verification request to the upper-layer application. The upper-layer application can perform, based on the data chain, the service verification initiated by the user in response to the service verification request initiated by the user, and then return a verification result to the user.

It is worthwhile to note that the verification service provided by the upper-layer application for the user based on the established trusted service model can be a verification initiated for any data node in the data chain, which is not limited in the present application.

In an illustrated embodiment, the verification service provided by the application for the user based on the established trusted service model can be a trusted real property verification service for the online real property rental service.

In this case, the tenant can initiate a trusted real property verification request through the upper-layer application, and the upper-layer application can verify whether the real property is a trusted real property based on the data chain in response to a trusted real property verification request initiated by a tenant.

Verifying whether the real property is a trusted real property can generally include verifying whether the real property corresponds to a real property with property title; and verifying whether the real property is a valid real property (that is, verifying whether the real property is currently rentable).

In a scenario, the trusted real property verification request can include a real property number of the real property rented by the tenant. After receiving the trusted real property verification request, the upper-layer application can first verify whether the real property number of the real property rented by the user has been stored in the blockchain. For example, the upper-layer application can use a data digest of the real property number as a query index to initiate a query in a block of a blockchain, so as to determine whether the real property number has been stored in the blockchain.

If the real property number has been stored in the blockchain, it indicates that the real property number of the real property has been reviewed by the rental platform. In this case, the upper-layer application can further trace data stored in the data chain, obtain the property title data referenced by the real property number that has been stored in the blockchain, and verify whether there are logical conflicts among the plurality of real property numbers referenced by the property title data. For example, if the sum of the sizes corresponding to the plurality of real property numbers is larger than the total size recorded in the property title data of the real property, it indicates that there are logical conflicts among the plurality of real property numbers.

If there are logical conflicts among a plurality of real property numbers referencing the property title data, it indicates that the real property number corresponds to a valid real property. In this case, the upper-layer application can further verify the data proof carried in the property title data; and if the data proof passes the verification, it indicates the real property corresponding to the property title data referenced by the real property number is a valid real property, and the real property rented by the tenant is a trusted real property.

In another scenario, the trusted real property verification request can further include a rental contract signed by the tenant and the real property rental agency. Because the rental contract references the real property number, after receiving the trusted real property verification request, the upper-layer application can query, based on the real property number referenced by the rental contract, all the rental contracts referencing the real property number that are stored in the blockchain, and then verify whether the detected rental contracts are all historical rental contracts. If the detected rental contracts are all historical rental contracts, if the detected rental contracts are all historical rental contracts, it indicates that there is no contract in effect in the rental period specified in the rental contract, and the real property corresponding to the real property number is in a rentable real property. In this case, the real property rented by the tenant is a valid real property. That is, a valid real property can correspond to a plurality of historical rental contracts that are stored in the blockchain and at most one rental contract currently in effect.

In an illustrated embodiment, the verification service provided by the upper-layer application for the user based on the established trusted service model can be a trusted tenant verification service for the online real property rental service.

In this case, the management user of the real property rental agency can initiate a trusted tenant verification request through the upper-layer application; and the upper-layer application can verify whether the tenant is a trusted tenant based on the data chain in response to the trusted real property verification request initiated by the management user of the real property rental agency.

Verifying whether a tenant is a trusted tenant can generally include verifying whether the tenant actually lives in the rented real property.

In this case, the trusted real property verification request can include a real property number of a real property rented by a tenant. After receiving the trusted real property verification request, the upper-layer application can trace the data in the data chain to obtain smart device data referencing the real property number; and after obtaining the smart device data referencing the real property number, the upper-layer application can obtain the smart device operation data referencing the smart device data.

Because the smart device operation data can reflect whether the referenced smart device is used by the tenant, and indirectly reflect whether the tenant of the real property where the smart device is installed is a trusted tenant that actually lives in the rented real property. Therefore, after obtaining the smart device data referencing the real property number, the upper-layer application can further verify whether the smart device operation data referencing the smart device data is obtained, to determine whether the tenant corresponding to the real property number is a trusted tenant that actually lives in the rented real property. If the smart device operation data referencing the smart device data is obtained, it indicates that the smart device installed in the real property corresponding to the real property number has an operation record indicating that the tenant is a trusted tenant that actually lives in the rented real property.

In an illustrated embodiment, the verification service provided by the upper-layer application for the user based on the established trusted service model can be a trusted rental credit verification service for the online real property rental service.

As previously described, the rental credits can be a number of rental credits issued to the tenant by the upper-layer application after determining, based on the smart device operation data stored in the blockchain, that the active time of the tenant in the rented real property reaches a predetermined threshold. That is, the number of rental credits indicates the active time of the tenant in the rented real property.

In this case, the management user of the real property rental agency can initiate a trusted rental credit verification request through the upper-layer application. The upper-layer application can verify, based on the data chain, whether the rental credits issued to the tenant are trusted rental credits in response to a trusted rental credit verification request initiated by the management user of a real property rental agency.

In general, verifying whether the rental credits issued to the tenant are trusted rental credits can include verifying whether the active time of the tenant in the rented real property reaches the active time indicated by the rental credits.

In this case, the trusted real property verification request can include the real property number of the real property rented by the tenant. After receiving the trusted real property verification request, the upper-layer application can trace the data in the data chain to obtain smart device data referencing the real property number; and after obtaining the smart device data referencing the real property number is obtained, the upper-layer application can obtain the smart device operation data referencing the smart device data.

The smart device operation data can be used to count the active time of the tenant in the rented real property, and the rental credits can be issued to the tenant when the active time reaches a predetermined threshold. Therefore, the upper-layer application can re-count the active time of the tenant in the rented real property based on the obtained smart device operation data, and verify whether the re-counted active time of the tenant in the rented real property matches the active time indicated by the rental credits issued to the tenant. If the two values match, it indicates that the number of rental credits issued to the tenant are reasonable, and the rental credits issued to the tenant are trusted rental credits.

For example, assuming that the active time of the tenant in the rented real property reaches two weeks, the upper-layer application will issue 10 rental credits to the tenant, then when performing a trusted rental credit verification on the 10 rental credits, the upper-layer application can verify whether the active time of the tenant in the real property is two weeks. If so, it indicates that the number of rental credits issued to the tenant is reasonable, and the 10 rental credits are trusted rental credits.

It is worthwhile to note that, in practice, in addition to the verification services such as the trusted real property verification, the trusted tenant verification, and the trusted rental credit verification for the online real property rental service, the verification service provided by the upper-layer application for the user by using a trusted service model that is established based on the data chain shown in FIG. 4 can be other types of verification service that can be performed based on the data chain shown in FIG. 4, such as a verification service for verifying whether a rental contract is valid, and a verification service for verifying whether a smart device in a rented real property is missing after the rental period expires, which are not listed in the present application.

Corresponding to the previously described method embodiments, the present application further provides an embodiment of a blockchain-based data processing apparatus. The embodiment of the blockchain-based data processing apparatus in the present application can be applied to an electronic device. The apparatus embodiment can be implemented by using software, hardware, or a combination of software and hardware. The software implementation is used as an example. As a logical apparatus, the apparatus is formed by reading the corresponding computer program instructions in the non-volatile memory by the processor of the electronic device into the memory for execution. In terms of hardware, FIG. 5 is a diagram illustrating a hardware structure of an electronic device in which a blockchain-based data processing apparatus is located. In addition to a processor, a memory, a network interface, and a non-volatile memory shown in FIG. 5, the electronic device can generally include other hardware based on other actual functions of the electronic device. Details are omitted here for simplicity.

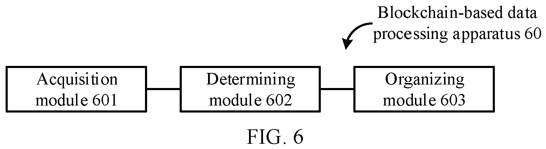

FIG. 6 is a block diagram illustrating a blockchain-based data processing apparatus, according to an example embodiment of the present application.

Referring to FIG. 6, the blockchain-based data processing apparatus 60 can be applied to the electronic device shown in FIG. 5, where the blockchain stores a plurality of types of service data related to a target service, the service data includes at least data content, and source data referenced by the service data. The apparatus 60 includes: an acquisition module 601, configured to obtain authentication root data related to a target service, where the authentication root data is pre-authenticated and carries a data proof indicating that the data authentication is passed; a determining module 602, configured to determine first data referencing the authentication root data among the plurality of types of service data, second data referencing the first data, and so on, until a data reference relationship between the plurality of types of service data is obtained; and an organizing module 603, configured to organize, based on the data reference relationship, the authentication root data and the plurality of types of service data into a service data chain that uses the authentication root data as a root node.

In some embodiments, the apparatus 60 further includes: a receiving module 604 (not shown in FIG. 6), configured to receive a service verification request related to the target service; and a verification module 605 (not shown in FIG. 6), configured to perform a service verification for the target service based on the service data chain in response to the service verification request, and return a service verification result.

In some embodiments, the service data includes data content and a data digest of the source data referenced by the service data; and the determining module 602 is configured to: initiate a query to the blockchain by using a data digest of the authentication root data as a query index; and when it is determined that the data digest of the source data referenced by any target service data in the plurality of types of service data matches the data digest of the authentication root data, determine that the target service data is the first data referencing the authentication root data.

In some embodiments, the authentication root data is stored in the blockchain or a third-party storage system interfaced with the blockchain.

In some embodiments, the plurality of types of service data are stored in different child chains in the blockchain.

In some embodiments, the target service includes a real property rental service; the authentication root data includes property title data that is pre-authenticated by a real property certification authority; and the plurality of types of service data include real property number data referencing the property title data, rental contract data referencing the real property number data, smart device data referencing the real property number data, and smart device operation data referencing the smart device data and the rental contract data, where the smart device operation data is used to determine the active time of the tenant in the rented real property.

In some embodiments, the service verification for the target service includes any one of the following: trusted real property verification for the real property rental service; trusted tenant verification for the real property rental service; or trusted rental credit verification for the real property rental service, where the rental credits are issued by the tenant to the tenant when the active time of the tenant in the rented real property reaches a threshold.

Because the apparatus embodiment basically corresponds to the method embodiment, for the related parts, references can be made to the description of the method embodiment. The previously described device embodiment is merely an example, where the units described as separate parts can or does not have to be physically separate, and components displayed as units can or does not have to be physical units, and can be located in one place or can be distributed on a plurality of network units. Based on the practical needs, some or all of these modules can be selected to implement the purpose of the present application. A person of ordinary skill in the art can understand and implement the technical solutions in some embodiments without creative efforts.

The system, apparatus, module, or unit illustrated in the previously described embodiments can be implemented by using a computer chip or an entity, or can be implemented by using a product with a certain function. A typical implementation device is a computer in the form of a personal computer, a laptop computer, a cellular phone, a camera phone, a smart phone, a personal digital assistant, a media player, a navigation device, an e-mail transceiver, a game console, a tablet computer, a wearable device, or any combination of at least two of these devices.

Corresponding to the previously described method embodiment, the present application further provides an embodiment of an electronic device. The electronic device includes a processor and a memory configured to store a machine executable instruction, where the processor and memory are usually connected to each other through an internal bus. In other possible embodiments, the electronic device can also include an external interface used to communicate with other devices or components.

In some embodiments, by reading and executing the machine executable instructions that are stored in the memory and that correspond to a control logic for blockchain-based data processing, the processor is enabled to: obtain authentication root data related to a target service, where the authentication root data is pre-authenticated and carries a data proof indicating that the data authentication is passed; determine first data referencing the authentication root data among the plurality of types of service data, second data referencing the first data, and so on, until a data reference relationship between the plurality of types of service data is obtained; and organize, based on the data reference relationship, the authentication root data and the plurality of types of service data into a service data chain that uses the authentication root data as a root node.

In some embodiments, by reading and executing the machine executable instructions that are stored in the memory and that correspond to a control logic for blockchain-based data processing, the processor is enabled to: receive a service verification request related to the target service; and perform a service verification for the target service based on the service data chain in response to the service verification request, and return a service verification result.

In some embodiments, the service data includes data content and a data digest of the source data referenced by the service data; and by reading and executing the machine executable instructions that are stored in the memory and that correspond to a control logic for blockchain-based data processing, the processor is enabled to: initiate a query to the blockchain by using a data digest of the authentication root data as a query index; and when it is determined that the data digest of the source data referenced by any target service data in the plurality of types of service data matches the data digest of the authentication root data, determine that the target service data is the first data referencing the authentication root data.

A person skilled in the art can easily figure out other embodiments of the present application after considering and practicing the present application disclosed here. The present application is intended to cover any variations, usage, or adaptations of the present application that follow the general principles of the present application and include common general knowledge or commonly used technical means in the art that are not disclosed in the present application. The present application and embodiments are merely examples. The protection scope and spirit of the present application are indicated by the following claims.

It should be understood that the present application is not limited to the structures previously described and illustrated in the accompanying drawings, and various modifications and changes can be made without departing from the scope thereof. The protection scope of the present application should be defined by the appended claims.

The previous descriptions are merely preferred embodiments of one or more embodiments of the present application, and are not intended to limit the present application. Any modification, equivalent replacement, improvement, etc., made without departing from the spirit and principles of the present application shall fall within the protection scope of the present application.

## Claims

1. A blockchain-based data processing method applied to an application client device configured to interact with a blockchain, wherein the blockchain stores a plurality of types of service data related to a target service in the form of a plurality of transactions, wherein the data structure of each service data of the plurality of types of service data includes data content of the service data and a data digest of source data referenced by the service data, wherein the plurality of transactions are stored in blocks of the blockchain, comprise, for each service data of the plurality of types of service data, a transaction carrying the service data, and are constructed by service nodes associated with online services deployed in the blockchain and related to the plurality of types of service data, wherein each transaction of the plurality of transactions is of a standard format supported by the blockchain extended to include a reference field filled by the data digest of the source data referenced by the service data carried by the transaction, wherein the method comprises:
obtaining (102) authentication root data related to the target service, wherein the authentication root data is pre-authenticated and carries a data proof indicating that data authentication is passed;
determining (104) first service data referencing the authentication root data among the plurality of types of service data, second service data referencing the first service data, and so on, to obtain a data reference relationship between the plurality of types of service data,
wherein determining first service data referencing the authentication root data among the plurality of types of service data comprises:
initiating a query to the blockchain by using a data digest of the authentication root data as a query index, and
when it is determined that there is a transaction carrying a target service data among the plurality of transactions carrying the plurality of types of service data, the reference field of which comprises a data digest of source data referenced by the target service data that matches the data digest of the authentication root data, determining that the target service data is the first service data referencing the authentication root data, and
wherein determining the second service data referencing the first service data comprises a same process as the determining the first service data referencing the authentication root data among the plurality of types of service data but using a data digest of the transaction carrying the first service data as the query index instead of the data digest of the authentication root data;
organizing (106), based on the obtained data reference relationship, the authentication root data and the plurality of types of service data into a service data chain that uses the authentication root data as a root node;
receiving a service verification request related to the target service;
performing a service verification for the target service based on the service data chain in response to the service verification request by tracing data in the service data chain based on the obtained data reference relationship; and
returning a service verification result.

2. The method according to claim 1, wherein the authentication root data is stored in the blockchain or a third-party storage system interfaced with the blockchain.

3. The method according to claim 1, wherein the plurality of types of service data are stored in different child chains in the blockchain.

4. The method according to claim 1, wherein the target service comprises a real property rental service;
the authentication root data comprises property title data that is pre-authenticated by a real property certification authority; and
the plurality of types of service data comprise real property number data referencing the property title data, rental contract data referencing the real property number data, smart device data referencing the real property number data, and smart device operation data referencing the smart device data and the rental contract data, wherein the smart device operation data is used to determine an active time of a tenant in a rented real property.

5. The method according to claim 4, wherein the service verification for the target service comprises any one of the following:
trusted real property verification for the real property rental service;
trusted tenant verification for the real property rental service; or
trusted rental credit verification for the real property rental service, wherein rental credits are issued by the tenant to the tenant when the active time of the tenant in the rented real property reaches a threshold.

6. An electronic device, comprising:
a processor; and
a memory, configured to store machine executable instructions;
wherein, by reading and executing the machine executable instructions that are stored in the memory and that correspond to a control logic for blockchain-based data processing, the processor is enabled to perform a method according to any one of the preceding claims.

7. A computer-readable storage medium comprising instructions stored thereon which, when executed by a processor of an electronic device, cause the processor to carry out a method according to any one of claims 1 to 5.

## Patentansprüche

1. Blockchain-basiertes Datenverarbeitungsverfahren, das auf eine Anwendungsclientvorrichtung angewendet wird, die eingerichtet ist, mit einer Blockchain zu interagieren, wobei die Blockchain eine Mehrzahl von Typen von Dienstdaten speichert, die sich auf einen Zieldienst in der Form einer Mehrzahl von Transaktionen beziehen, wobei die Datenstruktur jeder Dienstdaten der Mehrzahl von Typen von Dienstdaten Dateninhalt der Dienstdaten und einen Datenauszug von Quelldaten, auf die durch die Dienstdaten verwiesen wird, umfasst, wobei die Mehrzahl von Transaktionen in Blöcken der Blockchain gespeichert ist, für jede Dienstdaten der Mehrzahl von Typen von Dienstdaten eine Transaktion umfasst, die die Dienstdaten trägt, und durch Dienstknoten konstruiert ist, die mit Onlinediensten verknüpft sind, die in der Blockchain eingesetzt sind und sich auf die Mehrzahl von Typen von Dienstdaten beziehen, wobei jede Transaktion der Mehrzahl von Transaktionen von einem Standardformat ist, das durch die Blockchain unterstützt wird, die erweitert ist, um ein Referenzfeld zu umfassen, das durch den Datenauszug der Quelldaten gefüllt ist, auf die durch die Dienstdaten verwiesen wird, die durch die Transaktion getragen werden, wobei das Verfahren umfasst:
Erhalten (102) von Authentifizierungsstammdaten, die sich auf den Zieldienst beziehen, wobei die Authentifizierungsstammdaten vorauthentifiziert sind und einen Datenbeweis tragen, der angibt, dass eine Datenauthentifizierung bestanden ist;
Bestimmen (104) erster Dienstdaten, die sich auf die Authentifizierungsstammdaten beziehen, unter der Mehrzahl von Typen von Dienstdaten, zweiter Dienstdaten, die sich auf die ersten Dienstdaten beziehen, und so weiter, um eine Datenreferenzbeziehung zwischen der Mehrzahl von Typen von Dienstdaten zu erhalten,
wobei das Bestimmen erster Dienstdaten, die sich auf die Authentifizierungsstammdaten beziehen, unter der Mehrzahl von Typen von Dienstdaten umfasst:
Initiieren einer Abfrage an die Blockchain durch Verwenden eines Datenauszugs der Authentifizierungsstammdaten als einen Abfrageindex, und
wenn bestimmt wird, dass es eine Transaktion gibt, die Zieldienstdaten trägt, unter der Mehrzahl von Transaktionen, die die Mehrzahl von Typen von Dienstdaten tragen, deren Referenzfeld einen Datenauszug von Quelldaten umfasst, auf die sich die Zieldienstdaten beziehen, der mit dem Datenauszug der Authentifizierungsstammdaten übereinstimmt, Bestimmen, dass die Zieldienstdaten die ersten Dienstdaten sind, die sich auf die Authentifizierungsstammdaten beziehen, und
wobei das Bestimmen der zweiten Dienstdaten, die sich auf die ersten Dienstdaten beziehen, einen gleichen Prozess wie das Bestimmen der ersten Dienstdaten umfasst, die sich auf die Authentifizierungsstammdaten beziehen, unter der Mehrzahl von Typen von Dienstdaten, aber Verwenden eines Datenauszugs der Transaktion, die die ersten Dienstdaten trägt, als den Abfrageindex anstelle des Datenauszugs der Authentifizierungsstammdaten,
Organisieren (106), basierend auf der erhaltenen Datenreferenzbeziehung, der Authentifizierungsstammdaten und der Mehrzahl von Typen von Dienstdaten in eine Dienstdatenkette, die die Authentifizierungsstammdaten als einen Stammknoten verwendet;
Empfangen einer Dienstverifizierungsanforderung, die sich auf den Zieldienst bezieht;
Durchführen einer Dienstverifizierung für den Zieldienst basierend auf der Dienstdatenkette als Reaktion auf die Dienstverifizierungsanforderung durch Verfolgen von Daten in der Dienstdatenkette basierend auf der erhaltenen Datenreferenzbeziehung; und
Zurückgeben eines Dienstverifizierungsergebnisses.

2. Verfahren nach Anspruch 1, wobei die Authentifizierungsstammdaten in der Blockchain oder einem Speichersystem eines Drittanbieters, das mit der Blockchain verbunden ist, gespeichert werden.

3. Verfahren nach Anspruch 1, wobei die Mehrzahl von Typen von Dienstdaten in verschiedenen Kindketten in der Blockchain gespeichert werden.

4. Verfahren nach Anspruch 1, wobei der Zieldienst einen Immobilienvermietungsdienst umfasst;
die Authentifizierungsstammdaten Eigentumstiteldaten umfassen, die durch eine Immobilienzertifizierungsstelle vorauthentifiziert sind; und
die Mehrzahl von Typen von Dienstdaten Immobiliennummerndaten, die sich auf die Eigentumstiteldaten beziehen, Mietvertragsdaten, die sich auf die Immobiliennummerndaten beziehen, Smartvorrichtungsdaten, die sich auf die Immobiliennummerndaten beziehen, und Smartvorrichtungsbetriebsdaten, die sich auf die Smartvorrichtungsdaten und die Mietvertragsdaten beziehen, umfassen, wobei die Smartvorrichtungsbetriebsdaten verwendet werden, um eine aktive Zeit eines Mieters in einer gemieteten Immobilie zu bestimmen.

5. Verfahren nach Anspruch 4, wobei die Dienstverifizierung für den Zieldienst eines der Folgenden umfasst:
vertrauenswürdige Immobilienverifizierung für den Immobilienvermietungsdienst;
vertrauenswürdige Mieterverifizierung für den Immobilienvermietungsdienst; oder
vertrauenswürdige Mietkreditverifizierung für den Immobilienvermietungsdienst, wobei Mietkredite durch den Mieter an den Mieter ausgegeben werden, wenn die aktive Zeit des Mieters in der gemieteten Immobilie einen Schwellenwert erreicht.

6. Elektronische Vorrichtung, umfassend:
einen Prozessor; und
einen Speicher, der eingerichtet ist, maschinenausführbare Anweisungen zu speichern;
wobei durch Lesen und Ausführen der maschinenausführbaren Anweisungen, die in dem Speicher gespeichert sind und die einer Steuerlogik für eine Blockchain-basierte Datenverarbeitung entsprechen, der Prozessor befähigt wird, ein Verfahren nach einem der vorhergehenden Ansprüche durchzuführen.

7. Computerlesbares Speichermedium, umfassend darauf gespeicherte Anweisungen, die, wenn sie durch einen Prozessor einer elektronischen Vorrichtung ausgeführt werden, den Prozessor veranlassen, ein Verfahren nach einem der Ansprüche 1 bis 5 durchzuführen.

## Revendications

1. Procédé de traitement de données basé sur une chaîne de blocs appliqué à un dispositif client d'application configuré pour interagir avec une chaîne de blocs, dans lequel la chaîne de blocs stocke une pluralité de types de données de service liées à un service cible sous la forme d'une pluralité de transactions, dans lequel la structure de données de chaque donnée de service de la pluralité de types de données de service comprend un contenu de données des données de service et un condensé de données de données sources référencées par les données de service, dans lequel la pluralité de transactions sont stockées dans des blocs de la chaîne de blocs, comprennent, pour chaque donnée de service de la pluralité de types de données de service, une transaction portant les données de service, et sont construites par des noeuds de service associés à des services en ligne déployés dans la chaîne de blocs et liés à la pluralité de types de données de service, dans lequel chaque transaction de la pluralité de transactions est d'un format standard supporté par la chaîne de blocs étendue pour inclure un champ de référence rempli par le condensé de données des données sources référencées par les données de service portées par la transaction, dans lequel le procédé comprend :
l'obtention (102) de données racines d'authentification liées au service cible, dans lequel les données racines d'authentification sont pré-authentifiées et portent une preuve de données indiquant qu'une authentification de données est réussie ;
la détermination (104) de premières données de service référençant les données racines d'authentification parmi la pluralité de types de données de service, de secondes données de service référençant les premières données de service, et ainsi de suite, pour obtenir une relation de référence de données entre la pluralité de types de données de service,
dans lequel la détermination de premières données de service référençant les données racines d'authentification parmi la pluralité de types de données de service comprend :
le lancement d'une requête vers la chaîne de blocs en utilisant un condensé de données des données racines d'authentification en tant qu'index de requête, et
lorsqu'il est déterminé qu'il existe une transaction portant des données de service cibles parmi la pluralité de transactions portant la pluralité de types de données de service, dont le champ de référence comprend un condensé de données de données sources référencées par les données de service cibles qui correspond au condensé de données des données racines d'authentification, la détermination que les données de service cibles sont les premières données de service référençant les données racines d'authentification, et
dans lequel la détermination des secondes données de service référençant les premières données de service comprend un même processus que la détermination des premières données de service référençant les données racines d'authentification parmi la pluralité de types de données de service mais en utilisant un condensé de données de la transaction portant les premières données de service en tant qu'index de requête au lieu du condensé de données des données racines d'authentification ;
l'organisation (106), sur la base de la relation de référence de données obtenue, des données racines d'authentification et de la pluralité de types de données de service dans une chaîne de données de service qui utilise les données racines d'authentification en tant que noeud racine ;
la réception d'une demande de vérification de service liée au service cible ;
la réalisation d'une vérification de service pour le service cible sur la base de la chaîne de données de service en réponse à la demande de vérification de service en traçant des données dans la chaîne de données de service sur la base de la relation de référence de données obtenue ; et
le renvoi d'un résultat de vérification de service.

2. Procédé selon la revendication 1, dans lequel les données racines d'authentification sont stockées dans la chaîne de blocs ou un système de stockage tiers interfacé avec la chaîne de blocs.

3. Procédé selon la revendication 1, dans lequel la pluralité de types de données de service est stockée dans différentes chaînes enfants dans la chaîne de blocs.

4. Procédé selon la revendication 1, dans lequel le service cible comprend un service de location de biens immobiliers ;
les données racines d'authentification comprennent des données de titre de propriété qui sont pré-authentifiées par une autorité de certification de biens immobiliers ; et
la pluralité de types de données de service comprennent des données de numéro de bien immobilier référençant les données de titre de propriété, des données de contrat de location référençant les données de numéro de bien immobilier, des données de dispositif intelligent référençant les données de numéro de bien immobilier, et des données de fonctionnement de dispositif intelligent référençant les données de dispositif intelligent et les données de contrat de location, dans lequel les données de fonctionnement de dispositif intelligent sont utilisées pour déterminer un temps actif d'un locataire dans un bien immobilier loué.

5. Procédé selon la revendication 4, dans lequel la vérification de service pour le service cible comprend un quelconque des éléments suivants :
une vérification de bien immobilier de confiance pour le service de location de biens immobiliers ;
une vérification de locataire de confiance pour le service de location de biens immobiliers ; ou
une vérification de crédit de location de confiance pour le service de location de biens immobiliers, dans lequel des crédits de location sont émis par le locataire au locataire lorsque le temps actif du locataire dans le bien immobilier loué atteint un seuil.

6. Dispositif électronique, comprenant :
un processeur ; et
une mémoire, configurée pour stocker des instructions exécutables par machine ;
dans lequel, en lisant et en exécutant les instructions exécutables par machine qui sont stockées dans la mémoire et qui correspondent à une logique de commande pour un traitement de données basé sur une chaîne de blocs, le processeur est activé pour réaliser un procédé selon l'une quelconque des revendications précédentes.

7. Support de stockage lisible par ordinateur comprenant des instructions stockées sur celui-ci qui, lorsqu'elles sont exécutées par un processeur d'un dispositif électronique, amènent le processeur à réaliser un procédé selon l'une quelconque des revendications 1 à 5.
